# DEMANDE DE BREVET EUROPEEN

(11) **EP 1 024 044 A1**
(43) Date de publication de la demande: **02.08.2000**
(21) Numéro de dépôt: 99403135.9
(22) Date de dépôt: 14.12.1999
(51) Int. Cl.: B60J 10/00

(54) **Joint à effet insonorisant renforcé, pour encadrement de porte de véhicule automobile**

(30) Priorité: 27.01.1999 FR 9900866
(71) Demandeur: BTR SEALING SYSTEMS FRANCE, 92000 Nanterre (FR)
(72) Inventeur: Dron, Bernard, 92800 Puteaux (FR)
(74) Mandataire: Jolly, Jean-Pierre

(57) **Abrégé**

Dans ce joint, la surface interne de l'élément tubulaire (2) est gainée d'une pellicule (7) en un matériau souple différent de celui constituant l'élément tubulaire (2) et de celui constituant la partie formant pince (1) à laquelle l'élément (2) est attenant. Le matériau gainant la surface interne de l'élément tubulaire est de préférence imperméable aux gaz.

## Description

La présente invention concerne un joint à effet insonorisant renforcé, pour encadrement de porte de véhicule automobile.

On sait que de tels joints comprennent généralement un élément de fixation, apte à être rendu solidaire d'une partie saillante de l'encadrement de porte, et une partie tubulaire ou "bourrelet", attenante à cet élément et apte à se déformer élastiquement lorsqu'elle est comprimée entre l'encadrement et la porte associée. L'élément de fixation a habituellement une section en U et comporte une armature métallique gainée d'un élastomère ou d'un plastomère, par exemple de polychlorure de vinyle. Il vient coiffer un rebord saillant de la carrosserie et, pour éviter son désengagement accidentel de son support, les faces du U tournées vers celui-ci comportent généralement des lèvres dirigées vers ce support et facilitant l'accrochage de cette partie du joint de porte. La partie tubulaire est habituellement en caoutchouc cellulaire ou similaire et, comprimée entre l'encadrement de porte et la porte associée, elle assure l'étanchéité et l'insonorisation à ce niveau.

Cette partie tubulaire peut contenir un gaz, de l'air par exemple, et être disposée de manière à être comprimée et déformée entre la tranche de la porte et la partie correspondante de l'encadrement de porte.

Un second élément tubulaire, communiquant par au moins un orifice ou par une fente continue avec le précédent, peut avantageusement être interposé entre la face latérale interne de la porte et l'encadrement de porte, ce second élément ayant des dimensions telles qu'il ne soit comprimé entre la porte et l'encadrement de porte que lorsqu'il se dilate sous la pression de l'air expulsé de l'autre élément tubulaire. Le second élément tubulaire n'est donc gonflé par l'air expulsé de la première partie tubulaire que lorsque celle-ci est comprimée entre la tranche de la porte et la partie correspondante de l'encadrement de porte, et le second élément tubulaire vient ainsi s'appliquer fermement contre la porte et contre l'encadrement, pour assurer une seconde étanchéité à ce niveau.

Un joint de ce type est décrit par exemple dans FR-A-2 705 925.

D'autres joints de porte connus dans la technique comportent une partie tubulaire destinée à être pincée entre l'encadrement de porte et la porte, en position de fermeture de celle-ci, des moyens étant prévus pour gonfler alors cette partie tubulaire à l'aide d'un gaz sous pression, de l'air comprimé par exemple, après fermeture de la porte.

Un joint de ce type est décrit par exemple dans FR 2 607 216 A.

C'est à ces divers types de joints comportant une partie tubulaire destinée à être comprimée en position de fermeture de la porte que s'intéresse la présente invention et elle propose de gainer la face interne de cette partie tubulaire d'une pellicule en un élastomère ou plastomère différent du matériau constituant l'élément de fixation et de celui constituant la partie tubulaire, en vue d'améliorer l'insonorisation du véhicule.

L'invention vise également à améliorer l'imperméabilité aux gaz de la partie tubulaire, qui est fréquemment insastisfaisante lorsque cette partie est réalisée en un matériau cellulaire, en choisissant comme matéraiu gainant sa surface interne un matériau imperméable aux gaz.

L'invention a, par conséquent, pour objet un joint à effet insonorisant renforcé, pour encadrement de porte de véhicule automobile, comprenant un élément formant pince à section en U, apte à venir coiffer en la pinçant une partie saillante de l'encadrement de porte, et au moins un élément tubulaire attenant à la partie formant pince et disposé de façon telle qu'il soit comprimé en se déformant élastiquement entre l'encadrement et la porte, en position de fermeture de celle-ci, une partie de l'élément tubulaire pouvant être constituée par la portion de paroi latérale de l'élément formant pince à laquelle il est attenant, cet élément tubulaire pouvant alternativement être un organe autonome formant tube à lui seul, indépendamment de l'élément formant pince auquel il est attenant, ce joint étant caractérisé en ce que la surface interne de l'élément tubulaire est gainée d'au moins une pellicule continue en un matériau souple différent de celui constituant la partie formant pince et de celui constituant l'élément tubulaire.

Lorsque l'élément tubulaire comprend une portion formée par une partie latérale de l'élément formant pince auquel il est attenant, la face de cette partie formant pince tournée vers l'intérieur du tube est gainée de la pellicule rapportée en un matériau différent, qui forme une surépaisseur sur la partie latérale associée de l'élément formant pince et constitue une barrière aux ondes sonores, qui accroit l'effet d'insonorisation du profilé au niveau de la partie formant pince.

Lorsque l'élément tubulaire est un organe autonome, formant un tube à lui seul, indépendamment de la partie formant pince à laquelle il est attenant, le tube et la pellicule qui le gaine intérieurement forment deux barrières insonorisantes additionnelles, à l'emplacement où le tube est attenant à la partie formant pince, et cette forme de réalisation du joint conforme à l'invention est donc préférée, puisqu'elle assure le meilleur effet insonorisant.

Le matériau constitutif de la pellicule gainant la face interne de l'élément tubulaire peut avantageusement être un élastomère ou un plastomère et il a, de préférence, une masse spécifique différente de celle du matériau de cet élément tubulaire, en vue de restreindre la transmission des ondes sonores.

Comme indiqué ci-dessus, ce matériau est de préférence imperméable aux gaz.

On notera que le fait que cette pellicule soit disposée sur la face interne de l'élément tubulaire, et non sur sa face externe, permet à cet élément d'épouser facilement le profil de l'encadrement de porte, en particulier dans les angles, même si ces angles sont très accusés et ont un petit rayon de courbure.

Avantageusement, l'élément tubulaire et la pellicule qui le gaine intérieurement sont réalisés par co-extrusion, en même temps que l'élément formant pince.

L'invention est particulièrement bien adaptée à la réalisation de joints à deux éléments tubulaires du type décrit dans FR-A- 2 705 925 et de tels joints, dans lesquels au moins l'élément tubulaire destiné à être comprimé entre la tranche de la porte du véhicule automobile et l'encadrement de porte est gainé intérieurement par une pellicule en un matériau différent de celui constituant cet élément tubulaire et de celui constituant la partie formant pince, et ces joints constituent une forme de réalisation préférée de la présente invention.

D'autres caractéristiques et avantages de l'invention apparaîtront dans la description détaillée qui va suivre de trois formes de réalisation de celle-ci. Dans cette description, on se référera aux dessins annexés, sur lesquels :
La figure 1 est une coupe transversale d'une première forme de réalisation d'un joint de porte d'automobile conforme à l'invention, comportant un unique élément tubulaire, dont une portion est constituée par une partie latérale de l'élément formant pince auquel il est attenant ;
La figure 2 est une coupe transversale d'une variante de la figure 1, dans laquelle l'élément tubulaire est un organe autonome, distinct de l'élément formant pince auquel il est attenant ;
La figure 3 est une coupe transversale d'une troisième forme de réalisation d'un joint de porte d'automobile conforme à l'invention, comportant deux éléments tubulaires communiquant entre eux par au moins un orifice ou par un passage continu.

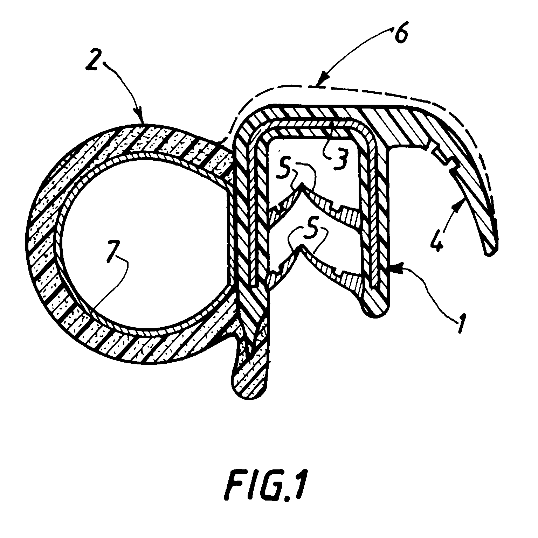

On se réfèrera d'abord à la figure 1.

Le joint pour encadrement de porte d'automobile qui y est représenté comprend un élément formant pince 1, à section transversale en U, destiné à coiffer un bord saillant de l'encadrement de porte et auquel est attenant latéralement un élément tubulaire d'étanchéité 2, déformable élastiquement, l'élément tubulaire 2 étant destiné à être pincé entre l'encadrement de porte et la porte associée, en position de fermeture de celle-ci.

Dans cette forme de réalisation, une portion de l'élément tubulaire 2 est constituée par une partie latérale de l'élément 1 auquel il est attenant.

L'élément 1 est en un élastomère ou en un plastomère tel que le polychlorure de vinyle, dans lequel est noyée une armature métallique 3 à section transversale en U. Une lèvre 4 en le même matériau que l'élément 1, mais qui pourrait être en un matériau différent, est attenante à la paroi latérale de cet élément parallèle à celle à laquelle est attenant l'élément tubulaire 2 et elle fait saillie latéralement vers l'extérieur. Des lèvres 5, en un élastomère compact, par exemple, font saillie à partir de chacune des parois latérales de l'élément 1 en direction de la paroi opposée et sont inclinées vers la base de celui-ci, de manière à pouvoir s'éclipser lorsqu'il est mis en position sur un bord saillant de l'encadrement de porte et à s'opposer ensuite à une désolidarisation accidentelle de cet élément et de ce bord saillant.

L'élément tubulaire 2 est en un matériau déformable élastiquement, par exemple en caoutchouc cellulaire. La face de la base de l'élément 1 non tournée vers l'intérieur du U et la face correspondante de la lèvre 4 peuvent être revêtues de ce même matériau, comme représenté en 6 sur le dessin. En utilisation, le tube 2 est empli d'air ou d'un autre gaz, éventuellement sous pression.

Conformément à l'invention, une pellicule 7 en un matériau différent de celui constituant l'élément 1 formant pince et de celui formant l'élément tubulaire 2, gaine toute la surface de la face interne de ce dernier et de la face de l'élément 1 tournée vers l'intérieur du tube, de manière à renforcer l'effet insonorisant du profilé, au niveau de la paroi latérale de l'élément 1.

De préférence, le matériau constituant la pellicule 7 a une masse spécifique différente de celle du matériau constitutif des éléments 1 et 2, afin de majorer l'effet insonorisant.

Il est avantageusement imperméable aux gaz, afin de renforcer l'étanchéité de l'élément tubulaire 2.

La pellicule 7 peut être en tout matériau approprié, élastomère ou plastomère, compact ou cellulaire. Dans le cas de la réalisation représentée sur le dessin, elle est en le même matériau que les lèvres 5, mais ceci dans un simple souci de commodité de réalisation.

Comme indiqué ci-dessus, un tel joint peut être réalisé par coextrusion des différents matériaux constituant l'élément 1, l'élément tubulaire 2, les lèvres 5 et la pellicule 7, à condition, naturellement, que ces matériaux soient plastiques ou thermoplastiques.

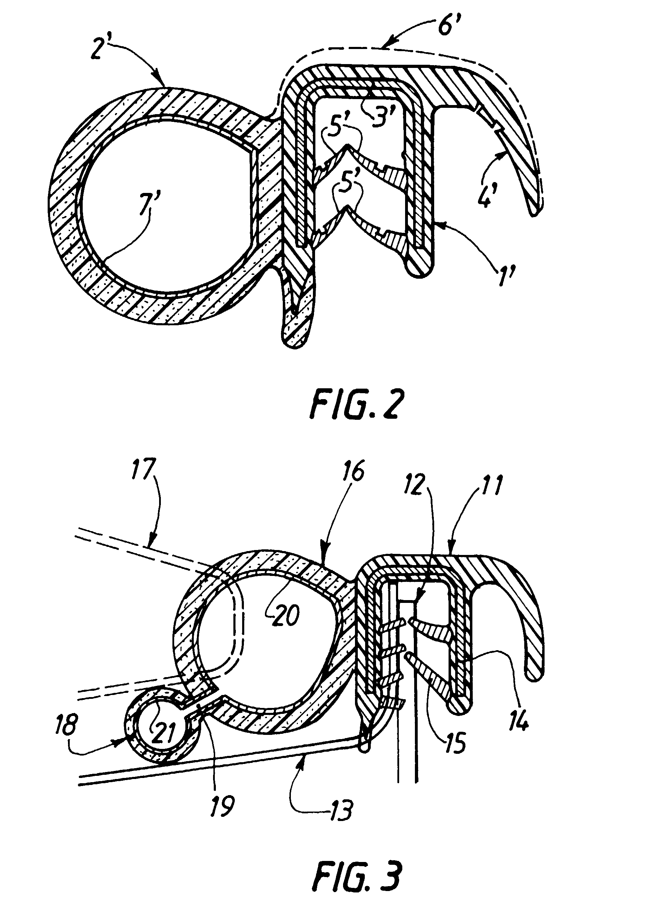

La figure 2, sur laquelle les organes déjà décrits en référence à la figure 1 sont désignés par les mêmes chiffres de référence affectés de l'indice ', représente un profilé du même type général que celui de la figure 1, mais dans lequel l'élément tubulaire 2' forme un tube à lui seul, indépendamment de l'élément 1' formant pince.

Dans cette forme de réalisation, le profilé comprend trois épaisseurs de matériaux différents à l'emplacement où l'élément tubulaire 2' est attenant à l'élément 1' formant pince, et l'on obtient donc un excellent effet insonorisant à ce niveau.

La figure 3 illustre l'application de l'invention à un joint de porte comportant deux éléments tubulaires communiquant entre eux, du type décrit dans FR-A-2 705 925.

Sur cette figure, où la porte 17 est représentée en traits interrompus, on voit que le joint comprend un élément 11 de fixation à section en U, destiné à coiffer un rebord saillant 12 de l'encadrement de porte.

Cet élément 11 comporte, de façon connue, une armature métallique 14, gainée par exemple de caoutchouc ou de polychlorure de vinyle, et des lèvres 15, faisant saillie en direction du rebord 12, qui assurent le maintien en position de l'élément 11 sur ce rebord.

A l'élément de fixation 11 est attenant un élément tubulaire 16, destiné, en position de fermeture de la porte 17, à être comprimé entre la tranche de celle-ci et la partie disposée en regard de l'encadrement de porte. A cet élément 16 est attenant un second élément tubulaire 18, de plus petites dimensions, qui communique par des orifices 19 avec l'élément 16. Les éléments 16 et 18 sont en un matériau élastiquement déformable, par exemple en caoutchouc cellulaire.

Conformément à l'invention, les éléments tubulaires 16 et 18 et les orifices 19 sont gainés intérieurement d'une pellicule en un matériau différent de celui de l'élément de fixation 11 et de celui des éléments tubulaires, respectivement 20 et 21, et de préférence imperméable aux gaz, par exemple en élastomère compact, qui gaine également l'intérieur des orifices 19 et permet aux éléments tubulaires d'assurer de façon fiable leur fonction de barrière étanche et d'organes insonorisants.

En effet, comme décrit dans FR-A-2 705 925, l'élément 18 a des dimensions telles que, normalement, il n'est pas directement comprimé par la porte 17, lorsqu'on la referme, et qu'il n'oppose donc pas de résistance à la fermeture. En revanche, l'élément 16, lui, est fortement sollicité par la tranche de la porte 17, lorsque l'on ferme celle-ci. Il est alors déformé par compression et l'air qu'il contient pénètre sous pression par les orifices 19 dans l'élément 18. Cet élément 18 se dilate donc et vient alors s'appliquer fermement contre la face interne de la porte et l'encadrement de porte.

L'étanchéité primaire du joint est assurée par l'élément tubulaire 16, mais l'élément 18 renforce considérablement l'isolation phonique du véhicule, ainsi que son étanchéité à l'eau.

Les pellicules 20 et 21 sont donc particulièrement bien adaptées à ce type de joint, dont elles en accroissent la fonction de barrière phonique, tout en renforçant son étanchéité.

## Revendications

1. Joint à effet insonorisant renforcé pour encadrement de porte de véhicule automobile, comprenant un élément formant pince (1, 1') à section en U, apte à venir coiffer en la pinçant une partie saillante de l'encadrement de porte, et au moins un élément tubulaire (2, 2') attenant à la partie formant pince et disposé de façon telle qu'il soit comprimé en se déformant élastiquement entre l'encadrement et la porte, en position de fermeture de celle-ci, une partie de l'élément tubulaire (2) pouvant être constituée par la portion de paroi latérale de l'élément formant pince (1) à laquelle il est attenant, cet élément tubulaire (2') pouvant alternativement être un organe autonome formant tube à lui seul, indépendamment de l'élément formant pince (1) auquel il est attenant, ce joint étant caractérisé en ce que la surface interne de l'élément tubulaire (2, 2') est gainée d'au moins une pellicule continue (7, 7') en un matériau souple différent de celui constituant la partie formant pince (1, 1') et de celui formant l'élément tubulaire (2, 2')

2. Joint selon la revendication 1, caractérisé en ce que le matériau de la pellicule (7, 7') gainant la face interne de l'élément tubulaire (2, 2') a une densité différente de celle du matériau dont est constitué cet élément tubulaire.

3. Joint selon l'une des revendications 1 et 2, caractérisé en ce que le matériau gainant la surface interne de l'élément tubulaire (2, 2') est imperméable aux gaz.

4. Joint selon l'une des revendications 1 à 3, caractérisé en ce que la pellicule (7, 7') est en un élastomère ou en un plastomère, compact ou cellulaire.

5. Joint selon l'une des revendications 1 à 4, dans lequel à l'une au moins des deux parois latérales de l'élément formant pince (1, 1') est attenante au moins une lèvre (5, 5') dirigée vers l'autre paroi et inclinée vers la base de la section en U de cet élément, ce joint étant caractérisé en ce que le matériau constitutif de la pellicule (7, 7') gainant la face interne de l'élément pellicule (7, 7') gainant la face interne de l'élément tubulaire (2, 2') est le même que celui constituant la ou les lèvres (5, 5').

6. Joint selon l'une des revendications 1 à 5, caractérisé en ce que, de façon connue en soi, l'élément tubulaire (16) attenant à l'élément formant pince (11) et gainé intérieurement d'une pellicule (20) est lui-même attenant à un second élément tubulaire (18), avec lequel il communique par au moins un orifice (19) ou un passage continu.

7. Joint selon la revendication 6, caractérisé en ce que le second élément tubulaire (18) et les orifices (19) sont également gainés intérieurement d'une pellicule (21) en un matériau différent.

8. Joint selon l'une des revendications précédentes, caractérisé en ce que le ou les éléments tubulaires (2, 2', 16, 18), la ou les pellicules (7, 7', 20, 21) qui les gainent intérieurement et la partie formant pince (1, 1', 11) sont issus d'une opération de co-extrusion.
